# EUROPÄISCHE PATENTSCHRIFT

(11) **EP 1 102 109 B1**
(45) Veröffentlichungstag und Bekanntmachung des Hinweises auf die Patenterteilung: **02.10.2002**
(21) Anmeldenummer: 00123112.5
(22) Anmeldetag: 25.10.2000
(51) Int. Cl.: G02F 1/1335, G02F 1/13357

(54) **Anzeigeinstrument**
Display apparatus
Dispositif d'affichage

(30) Priorität: 18.11.1999 DE 19955499
(43) Veröffentlichungstag der Anmeldung: 23.05.2001
(73) Patentinhaber: Siemens Aktiengesellschaft, 80333 München (DE)
(72) Erfinder: Brandt, Peter, 63739 Aschaffenburg (DE); Reuter, Klaus Peter, 63877 Seilauf (DE)

(56) Entgegenhaltungen:
- EP-A- 0 224 869
- EP-A- 0 605 246
- DE-A- 19 737 942
- DE-A- 19 848 547
- US-A- 5 504 323
- US-A- 5 952 992

## Beschreibung

Die Erfindung betrifft ein mit einem ein erstes und ein zweites Substrat aufweisenden TFT-Display (Thin Film Transistor Display) ausgestattetes Anzeigeinstrument, insbesondere in einem Kraftfahrzeug, welches Anzeigeinstrument zur Bestimmung der Umgebungshelligkeit mit einem Sensor verbunden ist, wobei zwischen den Substraten eine Flüssigkristallsubstanz eingeschlossen ist und das erste Substrat an seiner der Flüssigkristallsubstanz zugewandten Seite Dünnfilmtransistoren und das zweite Substrat an seiner der Flüssigkristallsubstanz zugewandten Seite eine Gegenelektrode aufweist.

Die EP 224 869 A zeigt ein Anzeigeinstrument, bei dem ein Lichtsensor anf einem der beidem Substrate außerhalb der Darstellungsfläche des Displays anfgebracht ist.

Die DE 197 37 942 A zeigt ein Anzeigeinstrument für ein kraftfahrzeng, bei dem die Lichtsensrem außerhalb des Displays angeordnet sind.

Ein derart ausgestattetes Anzeigeinstrument wird in der Praxis im Kraftfahrzeugbereich zunehmend eingesetzt und ist damit bekannt. Dabei dient das Anzeigeinstrument auch der Visualisierung sicherheitsrelevanter Informationen, die hierzu unter allen im Fahrbetrieb auftretenden Betriebsumständen fehlerfrei und zuverlässig ablesbar sein müssen. Insbesondere sind dabei die Extremlagen mit einerseits starker und direkter Sonneneinstrahlung auf das Anzeigeinstrument, andererseits Nachtfahrten mit geringem Restlichtanteil in der Umgebung zu berücksichtigen.

Um unter den genannten Umständen einen sicheren Betrieb des Kraftfahrzeuges zu gewährleisten und eine unzureichende oder übermäßige Helligkeit des Displays zu vermeiden, die zu einer Ablenkung des Kraftfahrzeugführers vom Verkehrsgeschehen führen kann, ist es daher erforderlich, das Anzeigeinstrument entsprechend der mittels des Sensors erfassten Umgebungshelligkeit anzusteuern. Hierzu wird der Sensor beispielsweise im Bereich einer das Anzeigeinstrument aufnehmenden Armaturentafel angeordnet.

Als nachteilig hat sich beim Stand der Technik erwiesen, dass es in der Praxis aus Platzgründen und aufgrund des optischen Erscheinungsbildes nicht möglich ist, dem Sensor eine zur Bestimmung der Helligkeit optimale Position zu verschaffen. Dabei wirkt sich hinderlich aus, dass bereits eine Position wenig abseits des Anzeigeinstrumentes zu einem fehlerhaften Messwert führen kann. Insbesondere schräg einfallendes Umgebungslicht kann dazu führen, dass der Sensor im Schatten liegt, während das Anzeigeinstrument als solches noch der vollen Lichteinstrahlung ausgesetzt ist.

Man könnte daran denken, die Helligkeit durch eine Vielzahl von im Innenraum des Kraftfahrzeuges verteilten Sensoren zu ermitteln, die in einer zentralen Steuereinheit ausgewertet werden, um daraus einen Durchschnittswert oder eine Wahrscheinlichkeit für die einfallende Umgebungshelligkeit zu bestimmen. Dies scheitert jedoch in der Praxis bereits an dem erheblichen Aufwand zur Kontaktierung der Sensoren. Weiterhin wird auch hierdurch eine fehlerhafte Bestimmung der Helligkeit nicht ausgeschlossen, sondern lediglich deren Wahrscheinlichkeit vermindert. Daher wird sich dieser Lösungsansatz aller Voraussicht nach bereits aus rein praktischen Überlegungen in der Serienfertigung nicht durchsetzen können.

Der Erfindung liegt das Problem zugrunde, ein Anzeigeinstrument der eingangs genannten Art so zu gestalten, dass eine möglichst genaue Erfassung der Umgebungshelligkeit mittels des Sensors ermöglicht wird.

Dieses Problem wird erfindungsgemäß dadurch gelöst, dass der Sensor in dem TFT-Display zwischen dem ersten und dem zweiten Substrat angeordnet ist. Hierdurch erfolgt die Bestimmung der Umgebungshelligkeit unmittelbar im Bereich des Displays, so dass mittels des Sensors ein realistischer Messwert der Helligkeit erfasst wird. Der so gewonnene Messwert ermöglicht beispielsweise die Ansteuerung einer Hintergrundbeleuchtung des Anzeigeinstrumentes mit einer für die Ablesbarkeit unter den vorherrschenden Umständen optimalen Helligkeit. Dabei sind lokale Helligkeitsdifferenzen zwischen der Position des Sensors und der Darstellungsfläche weitgehend ausgeschlossen. Zugleich wird der Herstellungsaufwand des Anzeigeinstrumentes wesentlich reduziert, da eine zusätzliche Verdrahtung, insbesondere zusätzlicher Sensoren im Innenraum des Kraftfahrzeuges, und die Verlegung von Leitungen im Kraftfahrzeug entfällt. Das erfindungsgemäße Anzeigeinstrument eignet sich dadurch auch für die Serienfertigung für Kraftfahrzeuge, aber auch für andere Einsatzgebiete, wie beispielsweise bei transportablen Rechnern oder bei Fernsehgeräten, die mit einem TFT-Display ausgestattet sind.

Die Herstellung des Anzeigeinstruments wird gemäß einer vorteilhaften Weiterbildung der Erfindung besonders dann vereinfacht, wenn der Sensor an dem die Dünnfilmtransistoren aufweisenden ersten Substrat angeordnet ist. Auf diese Weise können Transistoren und Sensor in gleichen Verfahrensgängen hergestellt werden.

Dabei ist eine besonders vorteilhafte Ausführungsform der Erfindung dadurch gegeben, dass der Sensor außerhalb eines Anzeigebereichs des Displays des Anzeigeinstrumentes angeordnet ist. Hierdurch ist der Sensor für einen Betrachter nicht oder zumindest nicht bei einem flüchtigen Blick erkennbar. Das optische Erscheinungsbild des Anzeigeinstrumentes wird demnach nicht durch den Sensor gestört. Weiterhin steht eine unveränderte Darstellungsfläche zu Verfügung, so dass die Ansteuerung zur Bilddarstellung in gewohnter Weise erfolgen kann.

Besonders empfehlenswert ist dabei auch eine Ausgestaltung der Erfindung, bei der der Sensor eine organische Diode aufweist. Solche organischen Dioden, zu denen insbesondere auch Polymer-Substanzen zählen, ermöglichen einerseits die Bestimmung der Helligkeit des einfallenden Lichtes aufgrund der damit einhergehenden Spannungsänderung, andererseits ermöglichen sie umgekehrt auch die Verwendung zur Bilddarstellung durch Anlegen einer Spannung. Die als Sensor verwendete organische Diode unterscheidet sich daher von einem mit entsprechenden Dioden ausgestatteten TFT-Display im wesentlichen nur durch die Art der Ansteuerung, so dass eine äußerst kompakte und platzsparende Einheit aus TFT-Display und Sensor erreicht wird. Hierzu kann beispielsweise jeweils ein äußerer Eckpunkt der Display-Fläche entsprechend angesteuert und als Sensor verwendet werden. Weiterhin kann dabei zugleich der Herstellungsaufwand weiter reduziert werden.

Hierbei ist eine besonders vorteilhafte Weiterbildung der Erfindung dadurch gegeben, dass das Display mit Dioden ausgestattet ist, die wahlweise entweder zur Bilddarstellung oder als Sensor zur Bestimmung der Umgebungshelligkeit einsetzbar sind. Hierdurch werden jeweils solche organische Dioden zur Bestimmung der Helligkeit verwendet, die jeweils zur Bilddarstellung des TFT-Displays nicht benötigt und daher nicht angesteuert werden. Die Auswahl des Sensors aus dem Feld der Dioden erfolgt daher nach der jeweils darzustellenden Abbildung, so dass keine Einschränkung der Darstellungsfläche aufgrund des Sensors erfolgt. Zugleich kann dabei die Auswahl der jeweils zur Bestimmung der Helligkeit als Sensor heranzuziehenden Diode bevorzugt aus dem Zentrum der Display-Fläche erfolgen, wodurch die Messgenauigkeit in bezug auf eine möglichst realistische Erfassung der Umgebungshelligkeit weiter erhöht werden kann.

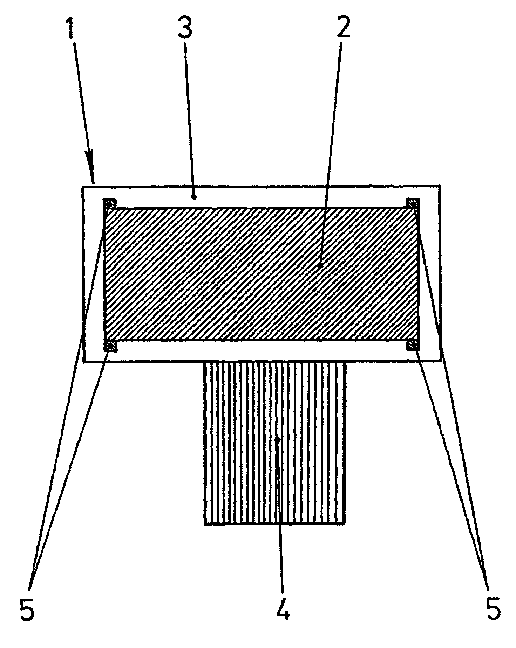

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in einer Prinzipskizze eine Draufsicht auf ein Anzeigeinstrument 1. Das Anzeigeinstrument 1 ist mit einem TFT-Display 2 ausgestattet, welches zwei in dieser Ansicht hintereinander angeordnete Glasplatten 3 als Substrate aufweist und mittels einer Kontaktierung 4 mit einer nicht dargestellten Steuereinheit verbunden ist. An einer dieser Glasplatten 3 sind vier jeweils an einer Ecke des TFT-Displays 2 außerhalb des Display-Anzeigebereichs positionierte Sensoren 5 zur Bestimmung der Helligkeit des einfallenden Umgebungslichtes angeordnet. Die als organische Dioden ausgeführten Sensoren 5 unterscheiden sich von denjenigen des ebenfalls aus nicht dargestellten organischen Dioden aufgebauten TFT-Displays 2 lediglich durch die Art der Ansteuerung. Der Herstellungsprozess kann dadurch wesentlich vereinfacht und die Fertigungskosten erheblich reduziert werden.

## Patentansprüche

1. Anzeigeinstrument, insbesondere für ein Kraftfahrzeug, mit einem ein erstes und ein zweites Substrat aufweisenden TFT-Display und einem Sensor zur Bestimmung der Umgebungshelligkeit, wobei zwischen den Substraten eine Flüssigkristallsubstanz eingeschlossen ist und das erste Substrat an seiner der Flüssigkristallsubstanz zugewandten Seite Dünnfilmtransistoren und das zweite Substrat an seiner der Flüssigkristallsubstanz zugewandten Seite eine Gegenelektrode aufweist, **dadurch gekennzeichnet, dass** der Sensor (5) in dem TFT-Display (2) zwischen dem ersten und dem zweiten Substrat angeordnet ist.

2. Anzeigeinstrument nach Anspruch 1, **dadurch gekennzeichnet, dass** der Sensor (5) an dem die Dünnfilmtransistoren aufweisenden ersten Substrat angeordnet ist.

3. Anzeigeinstrument nach Anspruch 1 oder 2, **dadurch gekennzeichnet, dass** der Sensor (5) außerhalb eines Anzeigebereichs des Displays (2) des Anzeigeinstrumentes (1) angeordnet ist.

4. Anzeigeinstrument nach einem der vorhergehenden Ansprüche, **dadurch gekennzeichnet, dass** der Sensor (5) eine organische Diode aufweist.

5. Anzeigeinstrument nach einem der vorhergehenden Ansprüche, **dadurch gekennzeichnet, dass** das Display (2) mit Dioden ausgestattet ist, die wahlweise entweder zur Bilddarstellung oder als Sensor (5) zur Bestimmung der Umgebungshelligkeit einsetzbar sind.

## Claims

1. Display instrument, in particular for a motor vehicle, with a TFT display having a first and a second substrate, and a sensor for determining the ambient brightness, with a liquid crystal substance being enclosed between the substrates and the first substrate having thin-film transistors on its side facing the liquid crystal substance and the second substrate having a counter-electrode on its side facing the liquid crystal substance, **characterized in that** the sensor (5) is arranged in the TFT display (2) between the first and the second substrate.

2. Display instrument according to Claim 1, **characterized in that** the sensor (5) is arranged on the first substrate, having the thin-film transistors.

3. Display instrument according to Claim 1 or 2, **characterized in that** the sensor (5) is arranged outside a display region of the display (2) of the display instrument (1).

4. Display instrument according to one of the preceding claims, **characterized in that** the sensor (5) has an organic diode.

5. Display instrument according to one of the preceding claims, **characterized in that** the display (2) is fitted out with diodes which can optionally be used either for displaying an image or as a sensor (5) for determining the ambient brightness.

## Revendications

1. Instrument d'affichage, en particulier pour un véhicule automobile, comportant un écran d'affichage TFT présentant un premier et un deuxième substrat, et un détecteur pour déterminer la luminosité environnante, une substance à cristaux liquides étant interposée entre les substrats, et le premier substrat présentant, sur sa face tournée vers la substance à cristaux liquides, des transistors à film mince, et le deuxième substrat. présentant, sur sa face tournée vers la substance à cristaux liquides, une contre-électrode,
**caractérisé en ce que**
le détecteur (5) est disposé, dans l'écran d'affichage TFT (2), entre le premier et le deuxième substrat.

2. Instrument d'affichage suivant la revendication 1, **caractérisé en ce que** le détecteur (5) est disposé contre le premier substrat présentant les transistors à film mince.

3. Instrument d'affichage suivant la revendication 1 ou la revendication 2, **caractérisé en ce que** le détecteur (5) est disposé en dehors d'une zone d'affichage de l'écran d'affichage (2) de l'instrument d'affichage (1).

4. Instrument d'affichage suivant l'une des revendications précédentes, **caractérisé en ce que** le détecteur (5) présente une diode organique.

5. Instrument d'affichage suivant l'une des revendications précédentes, **caractérisé en ce que** l'écran d'affichage (2) est constitué de diodes qui, au choix, peuvent être implantées soit pour la représentation de l'image, soit comme détecteur (5) destiné à déterminer la luminosité de l'environnement.
